(19) Europäisches Patentamt
European Patent Office
Office européen des brevets

(11) **EP 3 789 578 A1**

(12) **EUROPEAN PATENT APPLICATION**

(43) Date of publication:
**10.03.2021  Bulletin 2021/10**

(51) Int Cl.:
***E21B 3/00*** *(2006.01)*          ***H02M 5/27*** *(2006.01)*
***G05B 17/02*** *(2006.01)*      ***H02P 27/16*** *(2006.01)*

(21) Application number: **19196211.7**

(22) Date of filing: **09.09.2019**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Siemens Aktiengesellschaft
80333 München (DE)**

(72) Inventors:
• **Oyarzun Gonzalez, Jorge Alejandro
  91052 Erlangen (DE)**
• **Schneider, Joachim
  91074 Herzogenaurach (DE)**
• **Smits, Stefan
  91334 Hemhofen (DE)**
• **Tischler, Kurt
  91052 Erlangen (DE)**

(54) **METHOD, DEVICE AND SYSTEM FOR MANAGING MINING FACILITIES**

(57)     Method, device and system for managing a mining facility (150 A-N) including a plurality of systems is disclosed. The method comprises generating, on a simulation unit (102, 330), system models (210, 220, 230, 240) for one or more systems from the plurality of systems of the mining facility (150 AN); wherein the system models (210, 220, 230, 240) are generated based on one of input signal, sensor data and output signal from the plurality of systems at the mining facility (150 A-N); generating a facility model (200) of the mining facility (150 A-N) based on dependencies between the system models (210, 220, 230, 240); and managing the mining facility (150 A-N) by simulating operation of the mining facility (150 A-N) using the facility model (200).

FIG 1

EP 3 789 578 A1

**Description**

Technical background

The present invention relates to managing mining facilities using simulation. Particularly the present invention relates to managing mining facilities using real-time simulation.

Background

Generally mining facility include multiple systems to perform a mining operation. The systems include synchronous and asynchronous electro-mechanical machines. The mining facility may be typically located in a remote region. Further, the mining operation may be dangerous. Accordingly, manual monitoring the mining facility may be dangerous and time consuming.

Accordingly, the systems in the mining facility may be simulated. Simulating operation of the systems and the synchronous and asynchronous machines enable remote condition monitoring of the mining facility.

One approach may be to use off-line simulations to determine the condition of the mining facility. Such simulation methods may require significant simulation time and therefore may not be able to simulate operation of the mining facility in real-time. Accordingly, decisions in real-time cannot be taken based on the off-line simulations.

Summary

Real-time condition monitoring may be possible by improved simulation of the mining facility. According to a first aspect of the present invention a method of managing the mining facility is disclosed. The mining facility includes multiple systems that are used to perform the mining operation. The method includes generating, on a simulation unit, system models for one or more systems from the plurality of systems of the mining facility; wherein the system models are generated based on one of input signal, sensor data and output signal from the plurality of systems at the mining facility; generating a facility model of the mining facility based on dependencies between the system models; and managing the mining facility by simulating operation of the mining facility using the facility model.

Example mining facilities include mineral mining plants such as iron ore, copper ore etc. In the mining facility, recovered rocks may be put into large ore mills with diameters of approximately 13-15 meters. In certain cases, 400,000 tons of ore are mined every year. The mining facility includes motors and drives that drive the milling operation. An example motor includes a ring motor and an example mill drive includes a gearless mill drive with ratings up to 24 megawatt. In another example the motor is a single/dual pinon drive for mills, mine winders and conveyors. Accordingly, the multiple systems in the mining facility include the motor and the drive. Other systems may include a feeding unit, a transformer unit, a converter and a load unit. The load unit may further include a break unit and the mill load.

To control the drive, controllable converters such as cyclo-converters are used. The advantage of the cyclo-converter is its high availability, high overload capacity and high efficiency. The cyclo-converters are complex and therefore are not easily simulated. The present invention advantageously simulates operation of the cyclo-converter to determine control parameters in real-time. Further, the present invention advantageously simulates the feeding unit, the transformer, the motor, the drive and the load unit and thereby generating a digital replica of the mining facility. As used herein, "system models" refer to virtual replicas of the systems in the mining facility. The system models may be implemented based on the physics governing the system (physics-based model). The system models may comprise computer aided engineering (CAE) drawings, one dimensional or three-dimensional models for Computational Flow Dynamics (CFD), noise, vibration, and harshness (NVH), structures, and the like. In some embodiments, the system models may be implemented with one or more machine learning models in combination with the physics-based model.

For example, in an embodiment, input signal of the transformer unit and the output signal of the transformer unit are analyzed based on the physics governing the transformer unit to generate the transformer model. In another embodiment, sensor data associated with the transformer unit is used as feedback to update the physics-based model of the transformer.

The method may include generating a feed model for the feeding unit, the transformer model, a state-machine model for rectifiers in the cyclo-converter, a motor model for the motor and a load model for the load unit. The load model may further include a break model of the break unit. The system models include the feed model, the transformer model, the motor model, the load model and the break model.

In an embodiment, the method may include generating state machine models for the rectifiers based on modulation ratio or firing angle of one or more thyristors in the rectifiers. In a preferred embodiment firing pulses and a function of voltage and current from the transformer unit or the feeding unit are used to generate the state machine models.

The method may include determining converter states of the rectifiers of the cyclo-converter, the converter states are generated based on the firing pulses input to the thyristors in the rectifiers. The converter states are used to

2

generate the state machine model for the rectifiers. To determine the converter state, state values may need to be predicted. Accordingly, the method may include predicting state values of the converter states based on the firing pulse, voltage of the thyristors and current of the thyristors. The method may further include multiplexing the state values to determine the converter states. Further, the method may include predicting state transition for the cyclo-converter based on a present state of the cyclo-converter.

In an embodiment, the method may include determining an equivalent circuit for the converter states. For example, the thyristor may be modelled in terms of voltage, current and resistance. Further, different thyristors may be "turned on" or "turned off". Accordingly, equivalent circuit for each converter state may be generated. It will be appreciated by a person skilled in the art that the thyristors do not turn off unless the current is zero. Therefore, generating the state machine model is complex. The present invention is advantageous as the converter states are predicted based on the voltage measured across the thyristors. Further, in an embodiment, conditions such as faulty pluses and/or double commutations may be modelled based on historical data associated with the cyclo-converter.

To ensure that the complexities of the systems are modelled accurately, the method may include validating the system models by co-simulating the system models on one or more simulation platforms.

For example, the system model may be generated on a circuit modelling simulation platform and validated on customizable block-based dynamic simulation platform. To ensure that the co-simulation correctly performed, the method may include synchronizing co-simulation of the system models on the simulation platforms.

In another embodiment, validation of the system models may be performed by comparing simulated output and the output signals from the systems in the mining facility. The difference in the simulated output and the output signals are used as feedback to update the system model.

The system models are dependent on each other. The dependencies are modelled to generate the facility model of the mining facility. Accordingly, as used herein the "facility model" refers to the virtual replica of the mining facility. The facility model enables remote condition monitoring of the mining facility. Further, the facility model is advantageously used to predict and analyze anomalies in the mining facility.

The method may include determining the dependencies between the system models based on at least one of engineering drawings, process flow diagrams, layout map of the mining facility and inter-relation between data points in the sensor data. For example, process and instrumentation diagrams of the mining facility may be used to determine the systems that are associated with each other. In another example, sensitivity analysis may be performed on the sensor data to determine inter-relation between the data points. The inter-relation between the data points may be used to determine the association between the systems.

In an embodiment, the dependencies are determined such that the state machine model for the rectifiers in the cyclo-converter is generated based on motor current output from the motor model provided as input to the state machine model. In another embodiment, the motor model of the motor is generated based on speed output from the load model provided as input to the motor model.

Real-time generation of the system models may be required to monitor operation of the mining facility without any latency. Accordingly, the method may include generating one of the state machine model, the motor model and the load model using a Field Programmable Gate Array (FPGA).

The facility model may be used for remote condition monitoring and anomaly management. The method may include identifying anomalies in operation of the mining facility based on the sensor data and the output signals. The anomalies may be identified using a predetermined threshold for the sensor data and the output signals. In another embodiment, the anomalies may be identified using machine learning algorithms such as k-means clustering, box-plots, etc.

The method may further include determining condition parameters causing the anomalies by simulating probable anomaly conditions using the facility model. To simulate probable anomaly conditions, the method may include predicting the probable anomaly conditions based on the input data, the sensor data and the output data using root cause analysis algorithms such as Bayesian networks.

The method may include predicting optimized input signals for the mining facility based on the anomalies and the condition parameters. In an embodiment, the condition parameters and the optimized input signals are mapped in a log table.

In certain scenarios the optimized input signals are predicted based on trial and error. Accordingly, it is beneficial to validate the optimized input signals and the impact on the mining facility, prior to actualization. The method may include validating the optimized input signals by generating simulation instances for the optimized input signals for the mining facility using the facility model. For example, the simulation instances are generated when the optimized input signals are provided as input to the facility model. The behavior of the facility model is analyzed by determining whether the output values of the system models fall within a threshold. The method may further include operating the mining facility based on the validated optimized input signals.

In another scenario, there may be an update to the mining facility with respect to hardware or software. Such an update is referred to as a "new system". For example, hardware updates include modification in the physical parts like for example replacement of a thyristor in the cyclo-converter or replacement of motor windings of the motor. The software updates include modification of control parameters of the cyclo-converter, update in control software, etc.

The method may include predicting operation of the new system to be deployed in the mining facility using the facility model. As indicated above, the new system includes a newly commissioned system or a system, from the plurality of systems, with one of hardware update and software update. The method may further include optimizing design parameters of the new system based on the predicted operation. For example, the new system may refer to a new modulation technique for the firing pulses of the thyristors. The firing angle may be optimized to lead to reduction of reactive power.

The method may include simulating commissioning steps on the facility model. The simulation of the commission steps maybe used to compare the operation of the mining facility with respect to existing manuals.

The method may further include simulating speed control parameters on the facility model to test the multiple speed control modes. The method may also include displaying anomalies associated with speed control modes. Further, the method includes identifying changes in the speed control parameters to mitigate the anomalies.

A second aspect of the present invention is a simulation unit for managing a mining facility. The simulation unit comprises a Field Programmable Gate Array (FPGA). A memory communicatively coupled to the FPGA, wherein the memory comprises a simulation module stored in the form of machine-readable instructions executable by the FPGA, wherein the simulation module is configured to perform one or more method steps as above. The simulation module includes the system models and the facility model.

A third aspect of the present invention is a system for managing at least one mining facility. The system comprises one or more devices capable of providing sensor data and output data associated with operation of the at least one mining facility, and one or more afore-mentioned simulation units communicatively coupled to one or more devices. The simulation units are configured to manage the at least one mining facility.

In an embodiment, the system may include a cloud computing platform communicatively coupled to the one or more devices. The simulation modules of the simulation units may be stored on the cloud computing platform and accessed via a network interface. The network interface may be combination of wired and wireless data transfer connection, such as for example a WLAN, 2G, 3G, 4G or 5G network. Therefore, the system models and the facility model may be accessible via the network interface.

A fourth aspect of the present invention is a computer readable medium having machine-readable instructions stored therein, which when executed by a processing unit, cause the processing unit to perform the afore-mentioned method steps.

The present invention is not limited to a single computer system platform, processing unit, operating system, or network. One or more aspects of the present invention may be distributed among one or more computer systems, for example, servers configured to provide one or more services to one or more client computers, or to perform a complete task in a distributed system. For example, one or more aspects of the present invention may be performed on a client-server system that comprises components distributed among one or more server systems that perform multiple functions according to various embodiments. These components comprise, for example, executable, intermediate, or interpreted code, which communicate over a network using a communication protocol.

The above-mentioned and other features of the invention will now be addressed with reference to the accompanying drawings of the present invention. The illustrated embodiments are intended to illustrate, but not limit the invention.

The present invention is further described hereinafter with reference to illustrated embodiments shown in the accompanying drawings, in which:

FIG 1 illustrates a block diagram of a system for managing mining facilities, according to an embodiment of the present invention;

FIG 2-FIG 4 illustrates generation of a state machine model for a rectifier in a cyclo-converter, according to an embodiment of the present invention

FIG 5 illustrates a block diagram of a facility model of the mining facility in FIG 1, according to an embodiment of the present invention;

FIG 6 illustrates a block diagram of a simulation unit for managing a mining facility, according to an embodiment of the present invention;

FIG 7 illustrates method of managing a mining facility, according to an embodiment of the present invention; and

FIGs 8, 9 and 10 are graphs that illustrate optimization of input signals using the facility model, according to an embodiment of the present invention.

Hereinafter, embodiments for carrying out the present invention are described in detail. The various embodiments are de-scribed with reference to the drawings, wherein like reference numerals are used to refer to like elements throughout. In the following description, for purpose of explanation, numerous specific details are set forth in order to provide a thorough understanding of one or more embodiments. It may be evident that such embodiments may be practiced without these specific details.

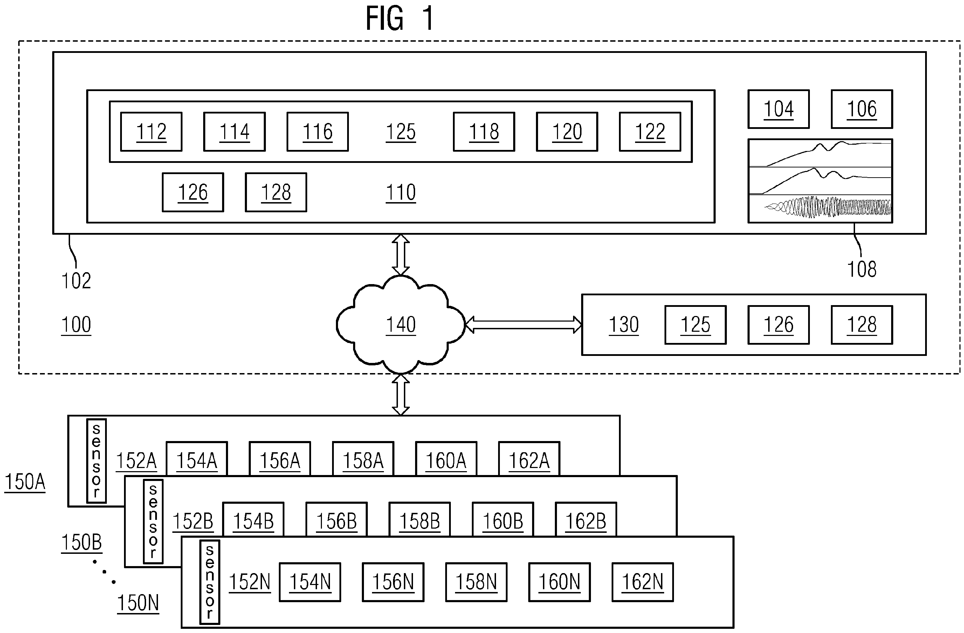

FIG 1 illustrates a block diagram of a system 100 including a simulation unit 102 for managing mining facilities 150A-150N, according to an embodiment of the present invention. The mining facilities 150A-150N includes devices 152A-152N that generate and transmit sensor data associated with respective mining facility to a simulation unit 102. In an embodiment, the devices 152A-N are part of the system 100.

The devices 152A-152N measure operation parameters of the respective mining facilities 150A-150N. The term "operation parameter" refers to one or more characteristics of the mining facility. For example, the operation parameters include ambient temperature, ambient pressure, vibration data from systems in the facility, voltage, flux, etc.

The mining facilities 150A-150N also include multiple systems to perform various mining operations. The systems include a feeding unit 154A-154N, a transformer unit 156A-156N, a cyclo-converter 158A-158N, a ring motor 160A-160N and a load unit 162A-162N. The feeding unit 154A-154N may also referred as the feeding network 154A-15N and may include medium voltage switchgear. The load unit 162A-1060N includes brake systems and mill load of the respective mining facility.

The system 100 includes the simulation unit 102 that is communicatively coupled to the mining facilities 150A-150N through a network interface 140. The network interface 140 may include a wired data transfer connection, such as Ethernet, and/or a wireless data transfer connection, such as for example a WLAN, 2G, 3G, 4G or 5G network.

The simulation unit 102 includes a trans-receiver 104 and one or more computing units 106 implemented as Field Programmable Gate Arrays (FPGAs). In an embodiment, the computing units 106 may include a combination of the FPGAs and Central Processing Units (CPUs). The simulation unit 102 also includes a Graphical User Interface (GUI) 108 to enable user to operate the simulation unit 102. The simulation unit 102 also includes a memory 110 configured to store computer program instructions defined by modules, for example, a simulation module 125.

The network interface 140 also provides access to a cloud computing platform 130 to communicate with the mining facilities 150A-150N. As used herein, "cloud computing environment" refers to a processing environment comprising configurable computing physical and logical resources, for example, networks, servers, storage, applications, services, etc., and data distributed over the network 140. The cloud computing platform 130 is configured with a memory and a processor to store and execute the simulation module 125.

The simulation module 125 when executed is configured to generate facility models for the mining facilities 150A-150N. The simulation module 125 includes modules 112, 114, 116, 118 and 120 to generate system models for the systems 154A-N, 156A-N, 158A-N, 160A-N and 162A-N in the mining facilities 150A-150N.

The simulation module includes a feeding model generator 112 to generate feeding models for the feeding units 154A-N. The feeding models are generated based on at least source voltage and feeding voltage (i.e.11, 20, 30kV). Further, the feeding models may also be generated based on predetermined relationships between current/voltage measured at nodes in the feeding units 154A-N.

The simulation module 125 includes a transformer model generator 114 to generate the transformer model for the transformer units 156A-N. The transformer model is generated based on the feeding voltage measured at the output of the feeding units 154A-N and transformer voltage measured at the output of the transformer units 156A-N. In an embodiment, the transformer model is generated based on electrical behavior of internal components of the transformer unit.

The simulation module 125 also includes a converter model generator 116 configured to generate state machine models for rectifiers in the cyclo-converter 158A-N. In certain embodiments, the mining facilities 150A-N may include excitation rectifiers. In such embodiments the converter model generator 116 is configured to generate excitation models for the excitation rectifiers. In an embodiment, the converter model generator 116 is executed on the FPGAs to ensure fast real-time simulation of the cyclo-converters 158A-N.

The state machine models are generated based on at least on firing pulses of one or more thyristors of the cyclo-converters 158A-N. Further, the state machine models are also generated based on a function of voltage and current from either the transformer units 156A-N or the feeding unit 154AN. The generation of the state machine model is further elaborated in FIGs 1B, 1C and 1D.

The simulation module 125 includes motor model generator 118 to generate motor models of the motor 160A-N based on speed output from load models.

The simulation module 125 further includes a load model generator 120. The load model generator 120 is configured to generate the load models for the loading units 162A-N. The load model generator 120 is further configured to generate brake model for the brake systems. The load models are generated based on torque output from the motor 160A-N.

The simulation module 125 includes a validation module 122. The validation module 122 is configured to validate the feeding models, the transformer models, the state machine models and the load models (collectively referred as system models). The validation module 122 is configured to co-simulate the system models to ensure that the system models act as virtual replicas of the associated system.

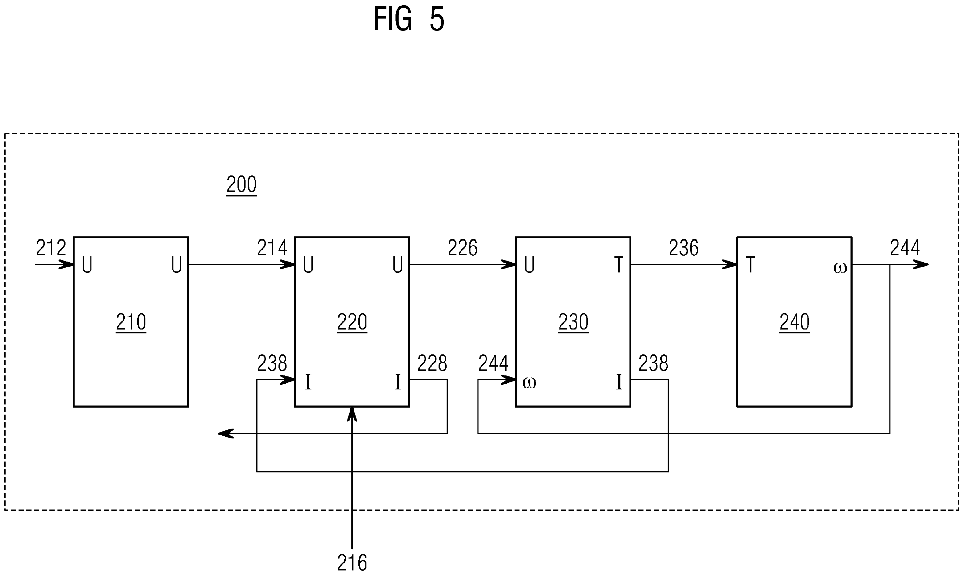

The facility models are generated from the system models. The simulation module 125 is configured to determine dependencies between the system models. The dependencies are defined by physics-based relationships between the system models. The dependencies between the system models are determined based on at least one of engineering drawings, process flow diagrams, layout map of the mining facility and inter-relation between data points in the sensor data. FIG 5 illustrates generation of the facility models based on the dependencies between the system models.

The facility models may be displayed on the GUI 108 by means of graphical representations. The mining facilities 150A-150N are managed by analysing the graphical representations. In certain embodiments, the mining facilities 150A-150N may be managed by detecting anomalies in the operation of the mining facilities 150A-150N.

In certain embodiments, the memory 110 and the cloud computing platform 130 may further include a prediction module 126 and an optimization module 128. The prediction module 126 is configured to predict operation of new systems that may be added to the mining facilities 150A-N. Further, the optimization module 128 is configured to predict and validate optimized input signals to improve operation of the mining facilities 150A-N.

The GUI 108 is used to display the predicted operation of the new systems. Further, the GUI 108 is used to display operation of the mining facility to validate the optimized input signals. In an embodiment, the simulation unit 102 may be communicatively coupled to a display device configured to display three-dimensional interactive models of the mining facilities 150A-N con-currently or sequentially.

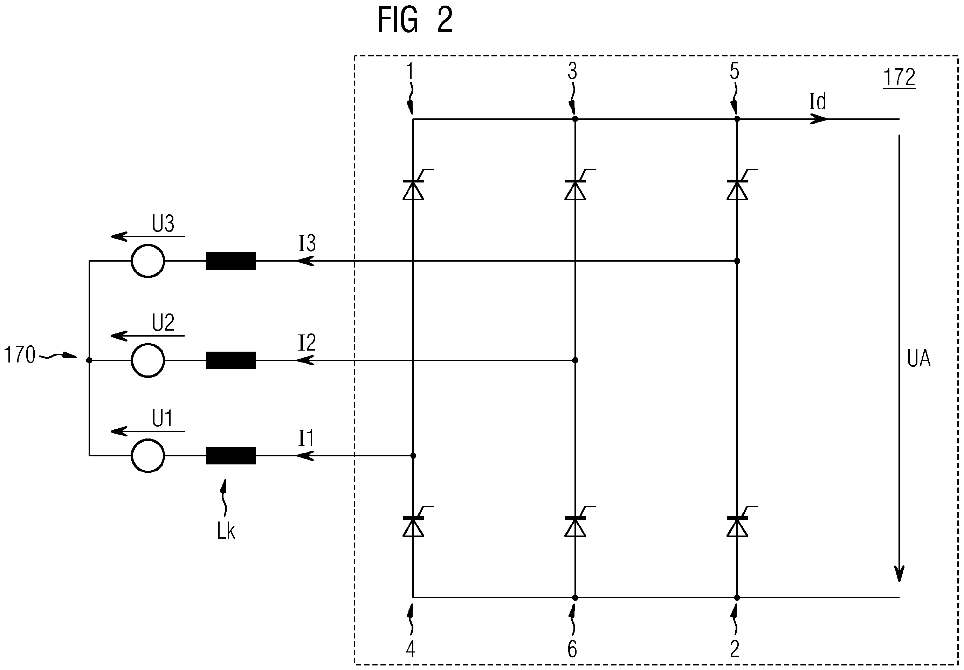

FIG 2-FIG 4 illustrates generation of a state machine model for the rectifiers in the cyclo-converter 158A, according to an embodiment of the present invention.

FIG 2 illustrates a circuit diagram 170 for a rectifier in the cyclo-converter 158A. The circuit diagram illustrates a thyristor bridge 172 with thyristors 1, 2, 3, 4, 5 and 6. The supply voltage is a three-phase supply of U1, U2, U3 voltage, with inductance of Lk and current I1, I2 and I3. Current Id and Output Voltage UA is seen across the thyristor bridge 172.

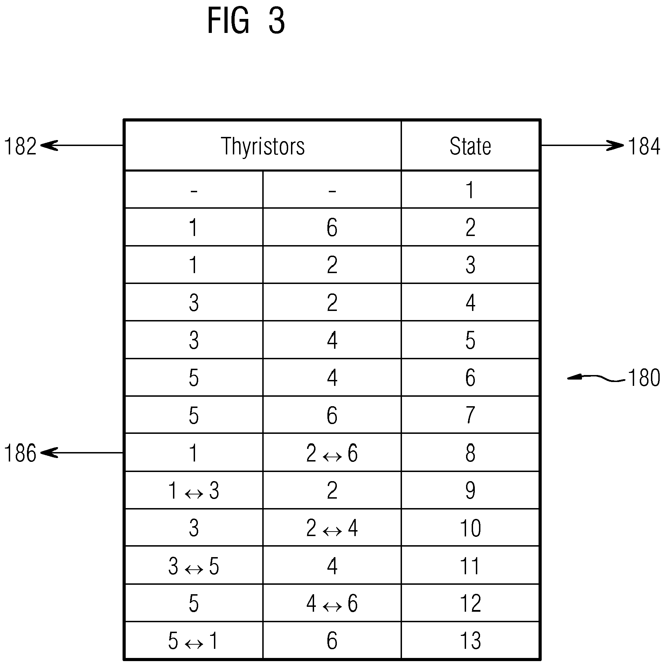

FIG 3 illustrates a state transition matrix 180 with active thyristors 182 and associated converter states 184. The matrix 180 illustrates transition from one active thyristor to another. The activation of the thyristor is achieved by firing pulses or change of the currents I1, I2 and I3. Further, it must be appreciated by a person skilled in the art that states 184 may vary based on the voltage phases. Further, the states 184 may vary if thyristor firing is not normal. Furthermore, in case of faulty pulses and double commutation, the states 184 may vary. Accordingly, the state transition matrix 180 is an embodiment may be updated to include the above-mentioned variations.

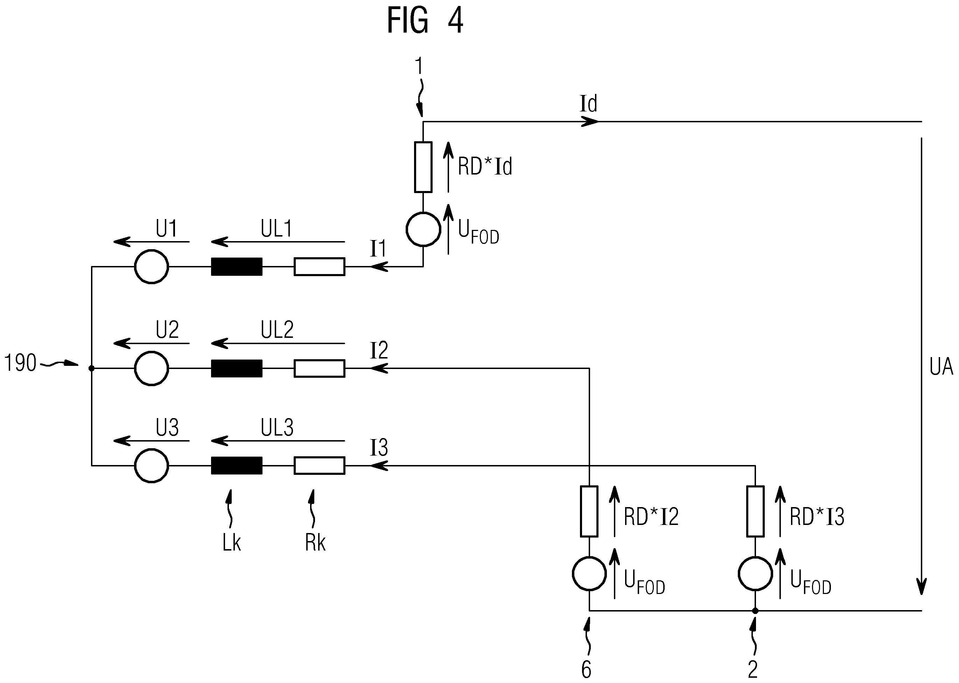

FIG 4 is an equivalent circuit 190 for the rectifier in the cyclo-converter 158A when in state 8 (indicated by the reference numeral 186). In state 8, the thyristor 1 is active and the current flow is transitioning from thyristor 2 to thyristor 6. The thyristors 1, 2 and 6 are modelled by a bent characteristic. Further, as illustrated, the thyristors 1, 2 and 6 are modelled as a combination of Resistance (RD) *Current and Voltage $U_{FOD}$. Further, the Inductance Lk is modelled as inductance and Resistance Rk.

The equivalent circuit 190 may be used to determine value of Output Voltage UA. For example, the follow equation is used to determine the Output Voltage UA.

$$UA = \frac{1}{2} * (2 * U1 - U2 - U3 - 4 * U_{FOD} - 3 * RD * Id - 3 * Rk * Id - 3 * Lk * \frac{dId}{dt})$$

Voltage across the Inductance Lk and Resistance Rk is determined as follows for the three phase U1, U2, U3 Voltage.

$$UL1 = -Rk * Id - Lk * \frac{dId}{dt}$$

$$UL2 = \frac{1}{3} * (U1 - 2 * U2 + U3 - UA - 2 * U_{FOD} - 3 * RD * I2)$$

$$UL3 = \frac{1}{3} * (U1 + U2 - 2 * U3 - UA - 2 * U_{FOD} - 3 * RD * I3)$$

Further, thristor voltage across the thyristors 1, 2, 3, 4, 5, and 6 is determined as below.

$$U_{thy\,1} = U_{FOD} + Id * RD$$

$$U_{thy\,2} = U_{FOD} + I3 * RD$$

$$U_{thy\,3} = -UA - (U_{FOD} + I2 * RD)$$

$$U_{thy\,4} = -UA - (U_{FOD} + Id * RD)$$

$$U_{thy\,5} = -UA - (U_{FOD} + I3 * RD)$$

$$U_{thy\,6} = U_{FOD} + I2 * RD$$

The above determination may be performed for all the states 184. In an embodiment, the above determination is performed in parallel for all the states 184 and the Output Voltage UA for the recitifer is determine via selection using a muliplexer.

FIG 5 illustrates a block diagram of a facility model 200 of the mining facility 150A in FIG 1, according to an embodiment of the present invention. The facility model 200 includes system models 210, 220, 230 and 240. For the purpose of FIG 5, the system models include a transformer model 210, a state machine model 220, a motor model 230 and a load model 240. Further, as shown in FIG 5, dependencies between the system models are illustrated using feedback connections 238 and 244.

The transformer model 210 is generated based on the feeding voltage 212 measured at the output of the feeding unit 154. The transformer voltage 214 is output from the transformer model 210 and is comparable to the voltage measured at the output of the transformer unit 156A. The transformer model 210 is generated based on electrical behavior of internal components of the transformer unit 156A.

The state machine model 220 is generated based on firing pulses 216, the transformer voltage 214 and motor current 238 from the motor model 230 using the equivalent circuit 190 and the state transition matrix 180.

Further, the motor model 230 is generated based on the Output Voltage (UA) 226 from the state machine model 220 and speed 244 output from the load model 240. The load model 240 receives torque 236 output from the motor model 230 to generate the speed 244.

It may be appreciated by a person skilled in the art that the dependency in FIG 5 is an example. Multiple dependencies such dependencies can be generated based on the engineering drawings, process flow diagrams, layout map of the mining facility 150A, etc. In an embodiment, sensor data from the devices 152A is analyzed by performing a sensitivity analysis to determine the dependencies in the system models.

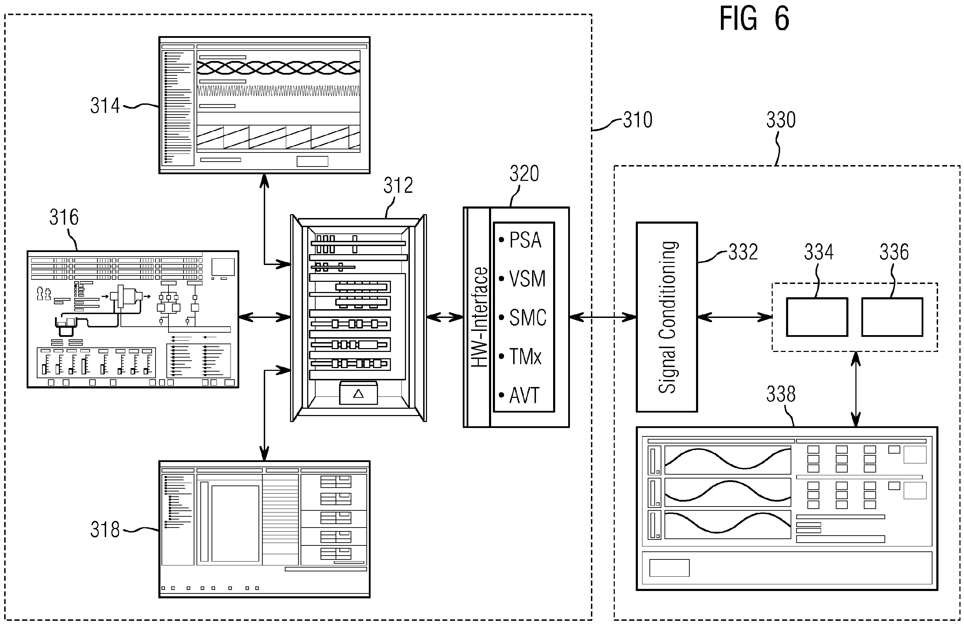

FIG 6 illustrates a block diagram of a simulation unit 330 for managing a mining facility 310, according to an embodiment of the present invention. Like the mining facilities FIG 1, the mining facility 310 includes a feeding unit, a transformer unit, a cyclo-converter control 312, a motor and a load unit. The simulation unit 330 may be communicatively coupled to the mining facility 310 via a network interface.

The cyclo-converter control 312 is configured to with 3.2 - 40 MVA power rating. The Output Voltage may vary from 1,500 - 4,000V. Further, thyristors in the cyclo-converter 312 are arranged three-phase bridges in a 6-pulse, 12-pulse or 24-pulse connection.

The cyclo-converter 312 may be controlled and commissioned via various devices and computer program instructions. In an embodiment, the mining facility 310 also includes a Graphical User Interface (GUI) 314, an automation module 316 and a commissioning module 318.

The GUI 314 is used to display and visualize the operation of the cyclo-converter 312. For example, the firing pulses of the thyristors, the input voltage, the output voltage etc. can be displayed. The automation module 316 is configured to display interconnections in the mining facility 310. The automation module 316 can also be used to indicate to an operator if there is any anomaly in the mining facility. The commissioning module 318 is generally used during commissioning of the cyclo-converter 312. The commissioning module 318 may also be used to implement diagnostics via the GUI 314.

In addition, the mining facility 310 further includes a hardware interface 320 enabling communication between the simulation unit 330 and the cyclo-converter 312.

The simulation unit 330 includes a signal conditioning unit 332, processing units 334 and 336, and a GUI 338. The signal condition unit 332 may include Input/Output boards for analog and digital signal. To enable fast simulation the signal conditioning unit 332 includes specialized boards. The signal conditioning unit 332 are configured to provide signal adaptations to specific electrical system voltages (12 V, 24 V, etc.); also, for current interfaces.

The processing units 334 and 336 include a Field Programmable Gate Array (FPGA) 334 and Central Processing Units (CPU) 336. The FPGA 334 may be used for fast online simulation of the systems in the mining facility 310. Further, the CPU 336 may be used for offline simulation. For example, state machine model for rectifiers of the cyclo-converter 312 may be executed on the FPGA 334. A load model for the load unit may be executed on the CPU 336. The usage of the processing units 334 and 336 is performed based on the requirement for fast online simulation.

The GUI 338 is configured to display the output from the processing units 334 and 336. Further, the GUI 338 is used to vary parameters associated with models implemented on the processing units 334 and 336.

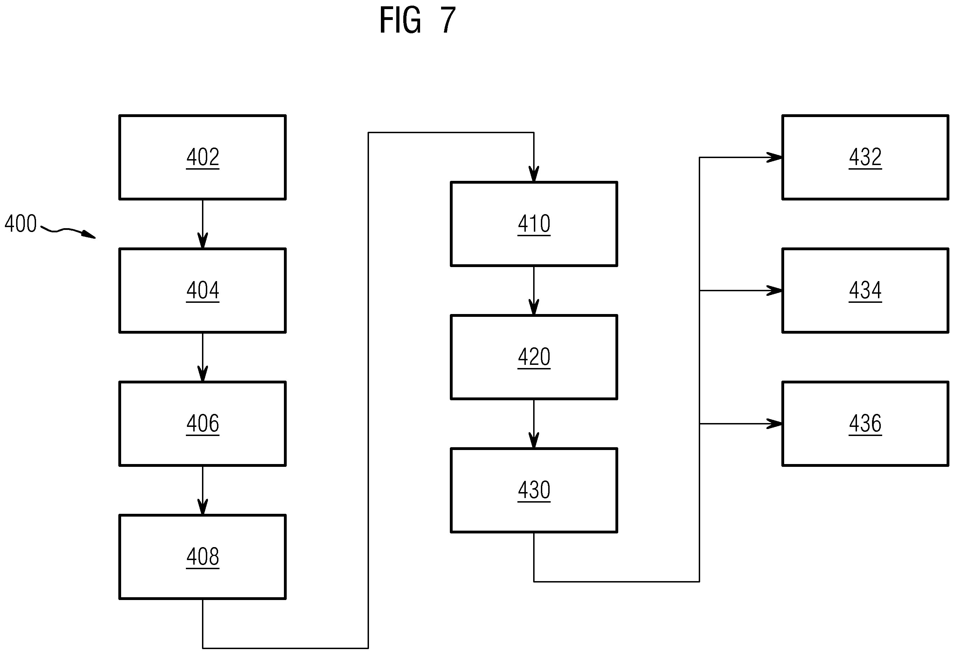

FIG 7 illustrates method 400 of managing a mining facility, according to an embodiment of the present invention. The method 400 beings at step 402 with receiving input signal, sensor data and output signal in relation to a plurality of systems at the mining facility.

At step 404 a feed model for the feeding unit and a transformer model for a transformer unit are generated. In an embodiment, the step 404 may be performed off-line prior to commissioning of the feeding unit and the transformer unit. Further, the feed model and the transformer model may be updated after installation and during operation of the mining facility.

At step 406, a state-machine model for the cyclo-converter and a motor model for the motor are generated. In an embodiment, the step 406 is executed on a FPGA to enable real-time fast Hardware-in-Loop simulation of the cyclo-converter and the motor. As used herein "Hardware-in-Loop simulation" refers to a method step in which one or more real components interact with components that are simulated in real time. Accordingly, the state-machine model receives input from the cyclo-converter deployed in the mining facility. Output of the state-machine model may be further used to modify input signals to the cyclo-converter.

In an embodiment, the step 406 may include generating a state machine model for the rectifiers of the cyclo-converter based at least on firing pulses of one or more thyristor of the rectifiers and a function of voltage and current from at least the transformer unit and the feeding unit.

The step 406 may include determining converter states for thyristors of the rectifiers in the cyclo-converter, the converter states are generated based on the firing pulses input to the cyclo-converter. The converter states are used to generate the state machine model. To determine the converter state, state values may need to be predicted. Accordingly, the step 406 may include predicting state values of the converter states based on the firing pulse, voltage of the thyristors and current of the thyristors.

The step 406 may further include multiplexing the state values to determine the converter states. Further, the step 406 may include predicting state transition for the rectifiers based on a present state of the rectifiers of the cyclo-converter.

In an embodiment, the step 406 may include determining an equivalent circuit for the converter states. For example, the thyristor may be modelled in terms of voltage, current and resistance. Further, different thyristors may be "turned on" or "turned off". Accordingly, equivalent circuit for each converter state may be generated.

Further, in an embodiment, conditions such as faulty pluses and/or double commutations may be modelled based on historical data associated with the cyclo-converter. In such an embodiment, the modelling may be performed off-line using a CPU.

At step 408, a load model and a break model for a load unit and a break unit are generated. In an embodiment, the step 408 is performed on the CPU.

The models generated in steps 404, 406 and 408 are collectively referred as system models.

At step 410 the system models are validated by co-simulating the system models on one or more simulation platforms. For example, the system model may be generated on a circuit modelling simulation platform and validated on customizable block-based dynamic simulation platform. To ensure that the co-simulation correctly performed, the step 410 may include synchronizing co-simulation of the system models on the simulation platforms.

In another embodiment, the step 410 may be performed by comparing simulated output from the system models and the output signals from the systems in the mining facility. The difference in the simulated output and the output signals are used as feedback to update the system models.

Real-time generation of the system models may be required to monitor operation of the mining facility without any latency. Accordingly, the step 410 may include generating one of the state machine model, the motor model and the load model using a Field Programmable Gate Array (FPGA).

At step 420, dependencies between the system models are used to generate a facility model of the mining facility. Accordingly, as used herein the "facility model" refers to the virtual replica of the mining facility. The facility model enables remote condition monitoring of the mining facility. Further, the facility model is advantageously used to predict and analyze anomalies in the mining facility.

The step 420 may include determining the dependencies between the system models based on at least one of engineering drawings, process flow diagrams, layout map of the mining facility and inter-relation between data points in the sensor data. For example, process and instrumentation diagrams of the mining facility may be used to determine the systems that are associated with each other. In another example, sensitivity analysis may be performed on the sensor data to determine inter-relation between the data points. The inter-relation between the data points may be used to determine the association between the systems.

In an embodiment, the dependencies are determined such that the state machine model of the rectifiers of the cyclo-converter is generated based on motor current output from the motor model provided as input to the state machine model. In another embodiment, the motor model of the motor is generated based on speed output from the load model provided as input to the motor model.

At step 430, the facility model is used to manage the mining facility. The management of the mining facility may be performed by remote condition monitoring and anomaly management.

At step 432 anomalies in operation of the mining facility are identified based on the sensor data and the output signals. The anomalies may be identified using a predetermined threshold for the sensor data and the output signals. In another embodiment, the anomalies may be identified using machine learning algorithms such as k-means clustering, box-plots, etc.

The step 432 may further include determining condition parameters causing the anomalies by simulating probable anomaly conditions using the facility model. The step 432 may include predicting optimized input signals for the mining facility based on the anomalies and the condition parameters. In an embodiment, the condition parameters and the optimized input signals are mapped in a log table.

The step 432 may include validating the optimized input signals by generating simulation instances for the optimized input signals for the mining facility using the facility model. For example, the simulation instances are generated when the optimized input signals are provided as input to the facility model. The behavior of the facility model is analyzed by determining whether the output values of the system models fall within a threshold. The step 432 may further include initiating operation of the mining facility based on the validated optimized input signals. Further, the mining facility is operated according to the optimized input signals.

At step 434, operation of a new system is predicted using the facility model. The new system may include a newly commissioned system or an existing system with hardware and software updates. The step 434 may further include optimizing design parameters of the new system based on the predicted operation. For example, the new system may refer to a new modulation technique for the firing pulses of the thyristors. The firing angle may be optimized to lead to reduction of reactive power.

At step 436, commissioning steps on the facility model are simulated. The simulation of the commission steps maybe used to compare the operation of the mining facility with respect to existing manuals.

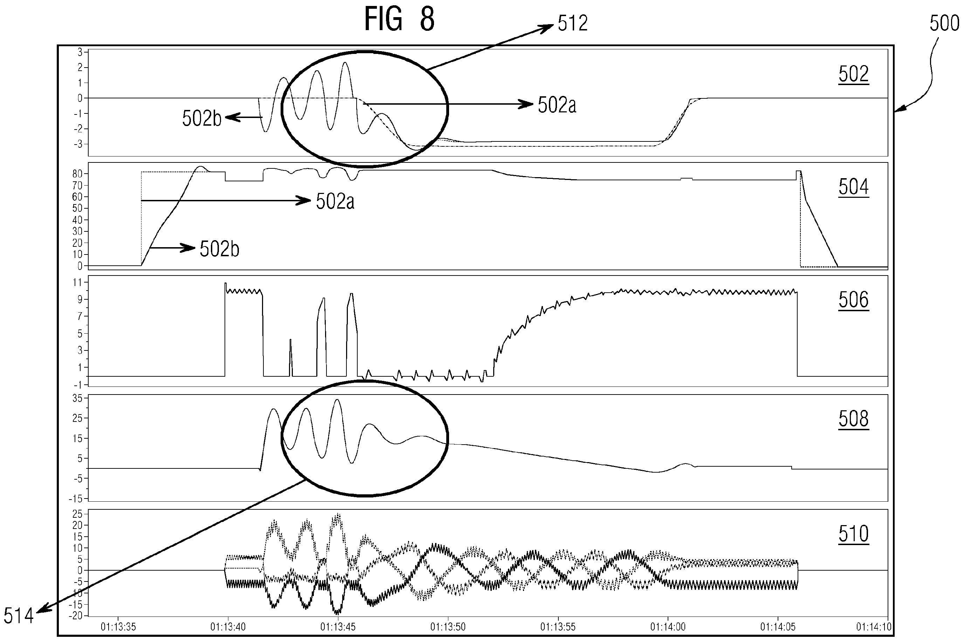

Implementation of steps 432, 434 and 436 may be visualized via graphs displayed on a GUI. FIGs 8-10 illustrate implementation of steps 432 and 434.

FIGs 8, 9 and 10 are graphs that illustrate optimization of input signals using a facility model of the mining facility. Simulation instances on the facility model are used to identify the most optimum input signals and is referred as the "optimized input signals".

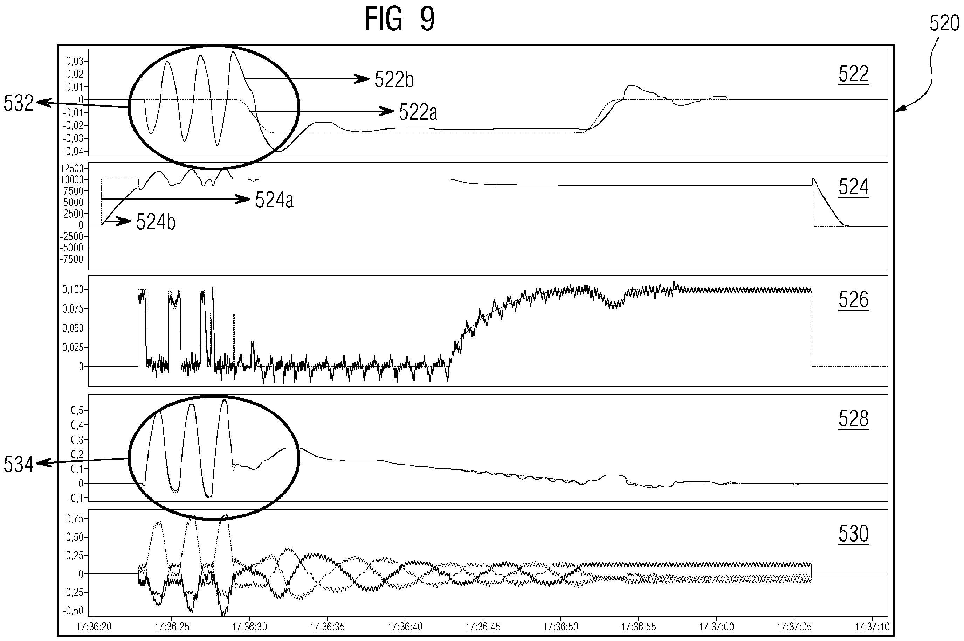

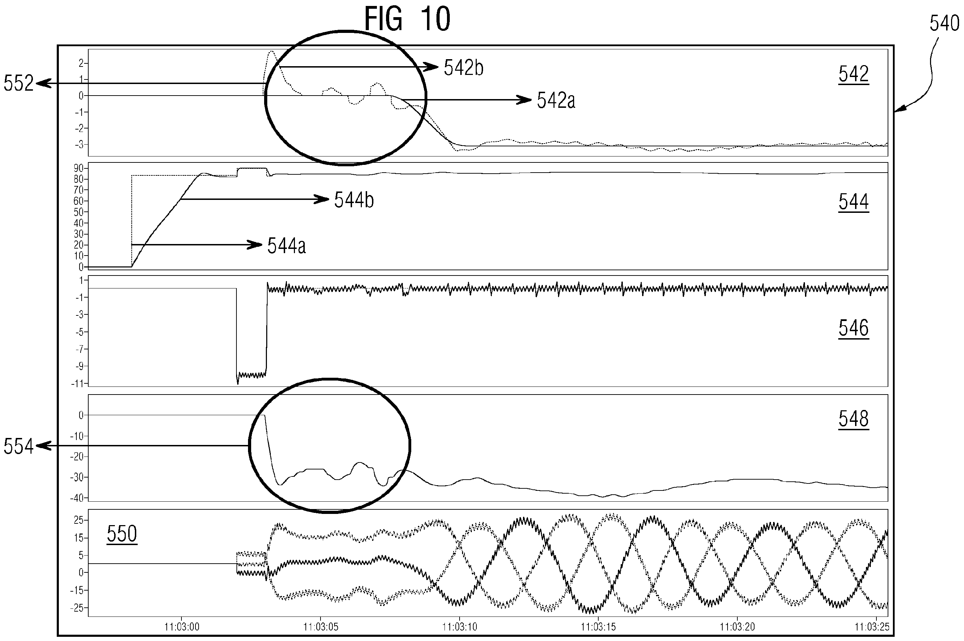

FIG 8 illustrates a facility trend 500 with plots 502-510. FIG 9 illustrates a simulated trend 520 with plots 522-530. FIG 10 illustrates an optimized trend 540 with plots 542-550.

The plots 502, 522 and 542 are speed plots. In FIG 8, the speed plot 502 includes a reference speed 502a and a measured speed 502b. In FIG 9, the speed plot 522 includes a simulated reference speed 522a and a simulated speed 552b. In FIG 10, the speed plot 542 includes reference speed 542a for optimized input signals and measured speed 542b for the optimized input signals.

The plots 504, 524 and 544 are Excitation Current (EC) plots. In FIG 8, the EC plot 504 includes a reference EC 504a and a measured EC 504b. In FIG 9, the speed plot 524 includes a simulated reference EC 524a and a simulated EC 552b. In FIG 10, the EC plot 544 includes reference EC 544a for the optimized input signals and measured EC 544b for the optimized input signals.

The plots 506, 526, 546 are magnetizing current plots. The plots 508, 528 and 548 are torque current plots. Further, the plots 510, 530 and 550 are three phase current plots. The plots 506, 508 and 510 are measured on site prior to the usage of optimized input signals. The plots 526, 528 and 530 are simulated plots generated from the facility model. The plots 546, 548 and 550 are measured on site of the mining facility after the optimized input signals are implemented.

In FIG 8 and 5B, mill oscillation is evident in plots 502, 508 and 522, 528, respectively. The mill oscillations 502 and 508 are observed at the site of the mining facility. The facility model also indicates mill oscillations 522 and 528.

The mill oscillations 522 and 528 were used to further analyse condition parameters associated with the mill oscillations 522 and 528. Probable causes of the mill oscillations are determined based on engineering drawings of the mining facility.

For example, in the present case the engineering drawings of the mining facility indicates a gearless mill drive that is held by brakes in an unbalanced position. Accordingly, probable cause for the mill oscillation 522 and 528 may be related to operation of the brakes. The facility model is used the simulate anomalies in operation of the brakes. In the present example, it is determined that delay in opening of the brakes may cause mill oscillations. Accordingly, the condition parameters of brake opening time was identified. Further, the delayed brake opening is simulated on the mining facility and compared with the plots 522 and 528.

When the condition parameters are identified, the optimized input signals are predicted based on the anomaly and the condition parameters. For the example of delayed brake opening, the speed controller values are identified as the input signals to be optimized. Further, multiple speed controller values are simulated on the facility model. The implementation of the optimized input signals is illustrated in FIG 10, the speed plot 542 and the torque plot 548 indicates reduced mill oscillations at 552 and 554.

In operation, the optimized input signals for the speed controller are communicated to a commissioning engineer at the mining facility. The commissioning engineer implements the optimized input signals. In another embodiment, the optimized input signals are implemented using a cloud computing platform on which relevant variables are updated. The updated variables are reflected at the mining facility. The present invention can take a form of a computer program product comprising program modules accessible from computer-usable or computer-readable medium storing program code for use by or in connection with one or more computers, processors, or instruction execution system. For the purpose of this description, a computer-usable or computer-readable medium can be any apparatus that can contain, store, communicate, propagate, or transport the program for use by or in connection with the instruction execution system, apparatus, or device. The medium can be electronic, magnetic, optical, electromagnetic, infrared, or semiconductor system (or apparatus or device) or a propagation mediums in and of themselves as signal carriers are not included in the definition of physical computer-readable medium include a semiconductor or solid state memory, magnetic tape, a removable computer diskette, random access memory (RAM), a read only memory (ROM), a rigid magnetic disk and optical disk such as compact disk read-only memory (CD-ROM), compact disk read/write, and DVD. Both processors and program code for implementing each aspect of the technology can be centralized or distributed (or a combination thereof) as known to those skilled in the art.

While the present invention has been described in detail with reference to certain embodiments, it should be appreciated that the present invention is not limited to those embodiments. In view of the present disclosure, many modifications and variations would be present themselves, to those skilled in the art without departing from the scope of the various embodiments of the present invention, as described herein. The scope of the present invention is, therefore, indicated by the following claims rather than by the foregoing description. All changes, modifications, and variations coming within the meaning and range of equivalency of the claims are to be considered within their scope. All advantageous embodiments claimed in method claims may also be apply to system/apparatus claims.

**Claims**

1. A method of managing a mining facility (150 A-N) including a plurality of systems, the method comprising:

   generating, on a simulation unit (102, 330), system models (210, 220, 230, 240) for one or more systems from the plurality of systems of the mining facility (150 A-N); wherein the system models (210, 220, 230, 240) are generated based on one of input signal, sensor data and output signal from the plurality of systems at the mining facility (150 AN) ;
   generating a facility model (200) of the mining facility (150 A-N) based on dependencies between the system models (210, 220, 230, 240); and
   managing the mining facility (150 A-N) by simulating operation of the mining facility (150 A-N) using the facility model (200).

2. The method according to claim 1, wherein the one or more systems include a feeding unit (154A-N), a transformer unit (156A-N), a cyclo-converter (158A-N), a motor (160A-N) and a load unit (162A-N) and wherein generating the system model comprises:

   generating a state machine model (220) for rectifiers of the cyclo-converter (158A-N) based at least on firing pulses (216) of at least one thyristor of the cyclo-converter (158AN) and a function of voltage and current from at least the transformer unit (156A-N) and the feeding unit (154A-N);
   generating a motor model (230) for the motor (160A-N) as a function of at least cyclo-converter (158A-N) voltage, rotational speed, motor current and motor torque; and
generating a load model (240) for the load unit (162A-N) based on a function of at least the motor torque and the rotational speed, wherein the system models (210, 220, 230, 240) include the state machine model (220), the motor model (230) and the load model (240).

3. The method according to claim 2, wherein generating the state machine model (220) comprises:
determining converter states for thyristors of the rectifiers, the converter states are generated based on the firing pulses input to the cyclo-converter (158A-N).

4. The method according to claim 3, wherein generating converter states comprises:

predicting state values of the converter states based on the firing pulse, voltage of the thyristors and current of the thyristors; and
determining the converter states based on a multiplexed output of the state values of the converter states.

5. The method according to one of claim 2 to 4, further comprising:
predicting state transition for the cyclo-converter (158A-N) based on a present state of the cyclo-converter (158A-N).

6. The method according any of the preceding claims, further comprising:
validating the system models (210, 220, 230, 240) by co-simulating the system models (210, 220, 230, 240) on one or more simulation platforms.

7. The method according to claim 1, wherein generating the facility model (200) of the mining facility (150 A-N) comprises:
determining the dependencies between the system models (210, 220, 230, 240) based on at least one of engineering drawings, process flow diagrams, layout map of the mining facility (150 A-N) and inter-relation between data points in the sensor data.

8. The method according to any of the preceding claims, at least to claim 2 and claim 7, further comprising:

generating the state machine model (220) for the rectifiers of the cyclo-converter (158A-N) based on motor current output from the motor model (230) provided as input to the state machine model (220); and
generating the motor model (230) of the motor (160A-N) based on speed output from the load model (240) provided as input to the motor model (230).

9. The method according to one the preceding claims, further comprising:
generating one of the state machine model (220), the motor model (230) and the load model (240) using a Field Programmable Gate Array (FPGA).

10. The method according one of the preceding claims, further comprising:

identifying anomalies in operation of the mining facility (150 A-N) based on the sensor data and the output signals;
determining condition parameters causing the anomalies by simulating probable anomaly conditions using the facility model (200);
predicting optimized input signals for the mining facility (150 A-N) based on the anomalies and the condition parameters;
validating the optimized input signals by generating simulation instances for the optimized input signals for the mining facility (150 A-N) using the facility model (200); and
initiating operation of the mining facility (150 A-N) based on the validated optimized input signals.

11. The method according to one of the preceding claims, further comprising:

predicting operation of a new system to be deployed in the mining facility (150 A-N) using the facility model (200), wherein the new system includes a newly commissioned system or a system, from the plurality of systems, with one of hardware update and software update; and
optimizing design parameters of the new system based on the predicted operation.

12. A simulation unit (102, 330) for managing a mining facility (150 A-N), the simulation unit (102, 330) comprising:

a Field Programmable Gate Array (FPGA); and

a memory communicatively coupled to the FPGA, wherein the memory comprises a simulation module stored in the form of ma-chine-readable instructions executable by the FPGA, wherein the simulation module is configured to perform one or more method steps according to claims 1 to 11.

13. A system (100) for managing at least one mining facility (150 A-N), the system comprising:

one or more devices capable of providing sensor data and out-put data associated with operation of the at least one mining facility (150 A-N); and

one or more simulation units (102, 330) according to claim 12, communicatively coupled to one or more devices, wherein the simulation units (102, 330) are configured to manage the at least one mining facility (150 A-N).

14. A computer readable medium having machine-readable instructions stored therein, which when executed by a processing unit, cause the processing unit to perform a method according to claims 1 to 11.

# FIG 1

EP 3 789 578 A1

FIG 2

EP 3 789 578 A1

# FIG 3

EP 3 789 578 A1

| Thyristors | | State |
|---|---|---|
| - | - | 1 |
| 1 | 6 | 2 |
| 1 | 2 | 3 |
| 3 | 2 | 4 |
| 3 | 4 | 5 |
| 5 | 4 | 6 |
| 5 | 6 | 7 |
| 1 | 2 ↔ 6 | 8 |
| 1 ↔ 3 | 2 | 9 |
| 3 | 2 ↔ 4 | 10 |
| 3 ↔ 5 | 4 | 11 |
| 5 | 4 ↔ 6 | 12 |
| 5 ↔ 1 | 6 | 13 |

182 ← 184 → 186 ← 180

FIG 4

# FIG 5

200

212 — U [ U  210  ] — 214 — U [ U  220  ω ] — 226 — U [ U  230  I ] — 236 — T [ T  240  ω ] — 244

228 — 238 — 216 — 244 — 238

FIG 6

314

316

312

320
- PSA
- VSM
- SMC
- TMx
- AVT

HW-Interface

310

318

330

Signal Conditioning

332

334

336

338

EP 3 789 578 A1

# FIG 7

EP 3 789 578 A1

FIG 8

500

512

502

502a

502b

504

502a

502b

506

508

510

514

01:13:35  01:13:40  01:13:45  01:13:50  01:13:55  01:14:00  01:14:05  01:14:10

FIG 9

EP 3 789 578 A1

## FIG 10

EP 3 789 578 A1

Europäisches
Patentamt

European
Patent Office

Office européen
des brevets

**EUROPEAN SEARCH REPORT**

Application Number

EP 19 19 6211

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2015/170090 A1 (BOSE SAM GOURAV [GB] ET AL) 18 June 2015 (2015-06-18) | 1,7,10, 11,14 | INV. E21B3/00 H02M5/27 G05B17/02 H02P27/16 |
| Y | * paragraph [0014] - paragraph [0015]; figures 1,2 * <br> * paragraph [0032] * <br> * paragraph [0043] * <br> * paragraph [0035] * <br> * paragraph [0055] * <br> ----- | 2-6,8,9, 12,13 | |
| Y | Víctor Guerrero ET AL: "A Predictive Current Control Strategy for a Naturally-Commutated Converter Using a Finite-State Machine Model", INTERNATIONAL JOURNAL OF ENERGY, 1 January 2017 (2017-01-01), pages 19-26, XP055674153, Retrieved from the Internet: URL:http://www.naun.org/main/NAUN/energy/2017/a062009-079.pdf [retrieved on 2020-03-05] * the whole document * <br> ----- | 2,8,9, 12,13 | |
| Y | LIU YUAN ET AL: "Modeling of Rectifier-Controlled Induction Motor Drive Load in Transient Stability Simulation Tools", IEEE TRANSACTIONS ON POWER SYSTEMS, IEEE SERVICE CENTER, PISCATAWAY, NJ, US, vol. 33, no. 5, 1 September 2018 (2018-09-01), pages 4719-4729, XP011689079, ISSN: 0885-8950, DOI: 10.1109/TPWRS.2018.2801020 [retrieved on 2018-08-22] * the whole document * <br> ----- | 2-4,8 | TECHNICAL FIELDS SEARCHED (IPC) <br><br> E21C H02M H02P G05B |

-/--

The present search report has been drawn up for all claims

| Place of search | Date of completion of the search | Examiner |
|---|---|---|
| The Hague | 6 March 2020 | Dantinne, Patrick |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons
 
& : member of the same patent family, corresponding
document

EPO FORM 1503 03.82 (P04C01)

Europäisches
Patentamt

European
Patent Office

Office européen
des brevets

## EUROPEAN SEARCH REPORT

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | GONZALEZ MARCOS ET AL: "Real-Time Simulation of a High-Power Cycloconverter Drive", IECON 2018 - 44TH ANNUAL CONFERENCE OF THE IEEE INDUSTRIAL ELECTRONICS SOCIETY, IEEE, 21 October 2018 (2018-10-21), pages 1448-1453, XP033486433, DOI: 10.1109/IECON.2018.8592686 [retrieved on 2018-12-27] * the whole document * | 3-6 | |

TECHNICAL FIELDS
SEARCHED      (IPC)

The present search report has been drawn up for all claims

| Place of search | Date of completion of the search | Examiner |
|---|---|---|
| The Hague | 6 March 2020 | Dantinne, Patrick |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 19 19 6211

This annex lists the patent family members relating to the patent documents cited in the above-mentioned European search report.
The members are as contained in the European Patent Office EDP file on
The European Patent Office is in no way liable for these particulars which are merely given for the purpose of information.

06-03-2020

| Patent document cited in search report | | Publication date | Patent family member(s) | | Publication date |
|---|---|---|---|---|---|
| US 2015170090 | A1 | 18-06-2015 | GB | 2521368 A | 24-06-2015 |
| | | | US | 2015170090 A1 | 18-06-2015 |

For more details about this annex : see Official Journal of the European Patent Office, No. 12/82

EPO FORM P0459